# EUROPEAN PATENT APPLICATION

(11) **EP 4 657 616 A1**
(43) Date of publication of application: **03.12.2025**
(21) Application number: 25178960.8
(22) Date of filing: 27.05.2025
(51) Int. Cl.: H01M 50/107, H01M 50/186, H01M 50/193, H01M 50/609, H01M 50/636, H01M 50/664, H01M 50/655

(54) **COLUMNAR SECONDARY BATTERY, ELECTROLYTE INJECTION METHOD, AND ELECTRICAL DEVICE**

(30) Priority: 28.05.2024 CN 202410675338
(71) Applicant: Xiamen Ampack Technology Limited, Xiamen City, Fujian Province, 361000 (CN)
(72) Inventor: SUN, Chuan, Xiamen City, Fujian Province, China, 361000 (CN); QIU, Shenzhao, Xiamen City, Fujian Province, China, 361000 (CN); HE, Ping, Xiamen City, Fujian Province, China, 361000 (CN); LIU, Daolin, Xiamen City, Fujian Province, China, 361000 (CN)
(74) Representative: Icosa

(57) **Abstract**

A columnar secondary battery includes a housing, a first sealing element, and a second sealing element. The housing includes a bottom wall. The bottom wall is provided with a first through-hole. The first sealing element is disposed on an outer surface of the bottom wall and covers at least a part of the first through-hole. At least a part of the second sealing element is disposed on one side of the first sealing element and covers the first sealing element and the first through-hole, the one side of the first sealing element is facing away from the bottom wall.

## Description

### TECHNICAL FIELD

This application relates to the technical field of energy storage, and in particular, to a columnar secondary battery, an electrolyte injection method, and an electrical device.

### BACKGROUND

Secondary batteries are widely used in social development increasingly. Columnar secondary batteries exhibit significant advantages in terms of safety, costeffectiveness, and recycling value. In the related art, in order to reduce the gas pressure in a housing of a columnar secondary battery, the battery typically employs a manufacturing process by which an injection port is created for electrolyte injection and chemical formation. However, during the chemical formation, an electrolyte solution is prone to leak from the injection port and corrode the housing.

### SUMMARY

In view of the situation above, this application provides a columnar secondary battery, an electrolyte injection method, and an electrical device to alleviate the problem of electrolyte leakage of the columnar secondary battery during chemical formation.

According to a first aspect, an embodiment of this application provides a columnar secondary battery. The columnar secondary battery includes a housing, a first sealing element, and a second sealing element. The housing includes a bottom wall. The bottom wall is provided with a first through-hole. The first sealing element is disposed on an outer surface of the bottom wall and covers at least a part of the first through-hole. At least a part of the second sealing element is disposed on one side of the first sealing element and covers the first sealing element and the first through-hole, the one side of the first sealing element is a side facing away from the bottom wall.

In the columnar secondary battery, the first sealing element covers at least a part of the first through-hole of the bottom wall. To be specific, the first sealing element fully covers the first through-hole, or the first sealing element partially covers the first through-hole. In the chemical formation stage of the columnar secondary battery, the first sealing element fully or partially covers the first through-hole, thereby alleviating the problem that the electrolyte solution is leaked during the chemical formation of the columnar secondary battery and corrodes the housing or allows moisture or other impurities to enter the housing. At least a part of the second sealing element is disposed on one side of the first sealing element and covers the first sealing element and the first through-hole, the side is away from the bottom wall, thereby favorably protecting the first sealing element and entirely sealing the housing, and improving the hermeticity and strength of the housing of the battery.

In one or more embodiments of this application, viewed along an axial direction of the columnar secondary battery, the first through-hole is located within an outer contour of the first sealing element; the first sealing element is provided with a second through-hole, and, viewed along the axial direction of the columnar secondary battery, the second through-hole is located within the first through-hole, and the second through-hole is in communication with the first through-hole.

In the columnar secondary battery, viewed along the axial direction of the columnar secondary battery, the first through-hole is located within the outer contour of the first sealing element, and the first sealing element is provided with a second through-hole. The second through-hole is located within and connected to the first through-hole. In this way, it is convenient to exhaust gas and replenish the housing with the electrolyte solution through the second through-hole after completion of the chemical formation of the columnar secondary battery, thereby facilitating the internal pressure relief of the columnar secondary battery and improves the convenience of electrolyte replenishment.

In one or more embodiments of this application, the area of the first through-hole is S1, and the area of the second through-hole is S2, 20% ≤ S2/S1 ≤ 60%.

In the above columnar secondary battery, the ratio of the area S2 of the second through-hole to the area S1 of the first through-hole is greater than or equal to 20%, so that the area of the second through-hole is not excessively small, thereby facilitating the gas exhausting of the columnar secondary battery during chemical formation and improving the convenience of electrolyte replenishment. The ratio of the area S2 of the second through-hole to the area S1 of the first through-hole is less than or equal to 60%, so that the area S2 of the second through-hole is not excessively large, thereby alleviating the problem of electrolyte leakage.

In one or more embodiments of this application, viewed along an axial direction of the columnar secondary battery, the first through-hole is located within an outer contour of the first sealing element. The first through-hole is circular. Along a diameter direction of the first through-hole, a minimum distance between an edge of the first through-hole and an edge of the outer contour of the first sealing element is L, 1.5 mm ≤ L ≤ 3 mm.

In the columnar secondary battery, along the diameter direction of the first through-hole, the minimum distance between the edge of the first through-hole and the edge of the first sealing element is controlled to fall between 1.5 mm and 3 mm, thereby improving the connection strength between the first sealing element and the bottom wall and making it convenient to reserve a sufficient welding area for the bottom wall.

In one or more embodiments of this application, the diameter of the first through-hole is D1, 1.5 mm ≤ D1 ≤ 4 mm.

In the columnar secondary battery, the diameter of the first through-hole is controlled to fall between 1.5 mm and 4 mm, so that the first through-hole is not excessively small, thereby improving the injection efficiency and facilitating the gas exhausting. On the other hand, the first through-hole is prevented from being excessively large, thereby increasing the overall strength of the battery.

In one or more embodiments of this application, the second sealing element includes a first part and a second part. Viewed along an axial direction of the columnar secondary battery, the second part is disposed on an outer periphery of the first part, the first part covers the first sealing element, and the second part is directly connected to the bottom wall.

In the columnar secondary battery, the first part of the second sealing element covers the first sealing element, thereby facilitating protection for the first sealing element. By connecting the second part of the second sealing element to the bottom wall, this application improves the stability of connection between the second sealing element and the bottom wall, and improves the hermeticity and overall strength of the housing of the battery.

In one or more embodiments of this application, along a diameter direction of the first through-hole, a minimum overlap dimension between the second part and the bottom wall in the axial direction is W, 2 mm ≤ W ≤ 4 mm.

In the columnar secondary battery, the minimum overlap dimension between the second part of the second sealing element and the bottom wall in the axial direction of the columnar secondary battery is set to be greater than or equal to 2 mm and less than or equal to 4 mm, thereby further improving the stability of connection between the second part of the second sealing element and the bottom wall, improving the hermeticity and overall strength of the housing of the battery, and favorably reserving a sufficient welding area for the bottom wall.

In one or more embodiments of this application, along the axial direction of the columnar secondary battery, a distance between the first part and the bottom wall is H3, and a thickness of the first sealing element is H4, 1.1 ≤ H3/H4 ≤ 1.3.

In the above columnar secondary battery, along the axial direction of the columnar secondary battery, the distance between the first part and the bottom wall is H3, and the thickness of the first sealing element is H4. The H3/H4 ratio is controlled to fall between 1.1 and 1.3. On the one hand, because the columnar secondary battery generates gas during chemical formation, the first sealing element is prone to bulge outward under the action of the gas pressure. A clearance exists between the first part and the first sealing element, thereby providing space for the first sealing element to bulge outward, and reducing the impact on the joint between the first sealing element and the bottom wall when the first sealing element bulges outward. On the other hand, by designing H3 to be greater than H4, this application alleviates the problem of interference between the first sealing element and the first part, and improves the stability of connection between the second part of the second sealing element and the bottom wall.

In one or more embodiments of this application, along the axial direction of the columnar secondary battery, the thickness of the first sealing element is H4, 0.1 ≤ H4 ≤ 0.2 mm.

In the columnar secondary battery, the thickness H4 of the first sealing element is greater than or equal to 0.1 mm and less than or equal to 0.2 mm, thereby increasing the strength of the first sealing element, reducing the space occupied by the first sealing element in the axial direction of the columnar secondary battery, and reducing the adverse effect of the first sealing element on the energy density of the columnar secondary battery.

In one or more embodiments of this application, along the axial direction of the columnar secondary battery, a thickness of the first part is H1, 0.2 mm ≤ H1 ≤ 0.3 mm; and/or, a thickness of the second part is H2, 0.2 mm ≤ H2 ≤ 0.3 mm.

In the columnar secondary battery, the thickness H1 of the first part is greater than or equal to 0.2 mm and less than or equal to 0.3 mm, the thickness H2 of the second part is greater than or equal to 0.2 mm and less than or equal to 0.3 mm, thereby increasing the strength of the second sealing element, reducing the space occupied by the second sealing element in the axial direction of the columnar secondary battery, and reducing the adverse effect of the second sealing element on the energy density of the columnar secondary battery.

In one or more embodiments of this application, the first sealing element includes a first layer and a second layer. The second layer is located on a side of the first layer, the side of the first layer is a side facing away from the bottom wall. Both the first layer and the second layer are polymer layers. A melting point of the second layer is higher than a melting point of the first layer.

In the columnar secondary battery, the first sealing element contacts the electrolyte solution. Both the first layer and the second layer are polymer layers, thereby improving the corrosion resistance of the first sealing element to the electrolyte solution. The melting point of the second layer is higher than that of the first layer, thereby melting the first layer by heating and pressurizing in a process of affixing the first sealing element to the bottom wall, and in turn, improving the sealing performance and producing an effect of quick connection to the bottom wall. The second layer melts at a relatively high melting point, and does not melt during the heating and pressurizing, thereby improving the integrity of the first sealing element and reducing the possibility of overall shrinkage or crumbling of the first sealing element during the heating and pressurization.

In one or more embodiments of this application, the melting point of the first layer is between 100 °C and 200 °C, and the melting point of the second layer is between 200 °C and 300 °C.

In the above columnar secondary battery, the melting point of the first layer is set between 100 °C and 200 °C, and the melting point of the second layer is set between 200 °C and 300 °C. When the first sealing element is pre-hermetically affixed to the bottom wall, the first sealing element is heated to a temperature between 100 °C and 200 °C, thereby making it convenient for the first layer to melt and get connected to the bottom wall, and reducing the processing difficulty. The melting point of the first layer is designed to be higher than the normal working temperature of the battery, thereby reducing the risk that the first layer is damaged and causes leakage.

In one or more embodiments of this application, the material of the first layer includes polypropylene or polyethylene; and/or, the material of the second layer includes polyethylene naphthalate or polyethylene terephthalate.

In one or more embodiments of this application, the material of the second sealing element includes nickel or nickel-plated carbon steel.

In one or more embodiments of this application, the columnar secondary battery further includes an electrode assembly and a current collecting disc. The housing includes an accommodation cavity. Both the electrode assembly and the current collecting disc are disposed in the accommodation cavity. The current collecting disc is disposed between the electrode assembly and the bottom wall, and the current collecting disc connects the electrode assembly and the bottom wall.

The current collecting disc is provided with a third through-hole. The third through-hole is in communication with the first through-hole.

In the above columnar secondary battery, the current collecting disc is configured to connect the electrode assembly and the bottom wall, thereby improving the stability of electrical connection between the electrode assembly and the housing. The third through-hole on the current collecting disc is in communication with the first through-hole, thereby making it convenient for the electrolyte solution to pass through the third through-hole of the current collecting disc and infiltrate the electrode assembly during injection, and improving the injection efficiency.

In one or more embodiments of this application, the columnar secondary battery includes a prismatic secondary battery, a cylindrical secondary battery, or a rounded prismatic secondary battery.

In one or more embodiments of this application, the columnar secondary battery is a cylindrical secondary battery. The diameter of the cylindrical secondary battery ranges from 17 mm to 55 mm.

According to a second aspect, an embodiment of this application provides an electrolyte injection method for injecting an electrolyte solution into the columnar secondary battery disclosed in one or more of the above embodiments. The method includes the following steps:
Providing a housing, where the housing includes an accommodation cavity and is provided with an opening at one end, the housing includes a bottom wall, and the bottom wall includes a first through-hole;
Pre-assembling: placing an electrode assembly that includes a first electrode and a second electrode into the accommodation cavity, and electrically connecting the second electrode to the housing;
Opening sealing: electrically connecting the first electrode to an end cap, and then sealing the opening with the end cap, where the end cap is dielectrically connected to the housing;
Electrolyte injection: injecting the electrolyte solution into the housing from the first through-hole;
Pre-sealing: hermetically closing the first through-hole by using the first sealing element;
Static standing: leaving the pre-sealed battery to stand statically to allow reactions between the electrode assembly and the electrolyte solution;
Pressure relief: unsealing the first through-hole sealed by the first sealing element so that the accommodation cavity communicates with an outside environment;
Electrolyte replenishment: replenishing the accommodation cavity with the electrolyte solution through the first through-hole; and
Overall sealing: using a second sealing element to cover the first sealing element and the first through-hole, and welding and sealing the bottom wall with the second sealing element.

In the columnar secondary battery with the electrolyte solution injected by the above injection method, the first sealing element covers at least a part of the first through-hole of the bottom wall. To be specific, the first sealing element fully covers the first through-hole, or the first sealing element partially covers the first through-hole. In the chemical formation stage of the columnar secondary battery, the first sealing element fully or partially covers the first through-hole, thereby alleviating the problem that the electrolyte solution is leaked during the chemical formation of the columnar secondary battery and corrodes the housing or allows moisture or other impurities to enter the housing. At least a part of the second sealing element is disposed on one side of the first sealing element and covers the first sealing element and the first through-hole, the side is away from the bottom wall, thereby favorably protecting the first sealing element and entirely sealing the housing, and improving the hermeticity and strength of the housing of the battery.

According to a third aspect, an embodiment of this application provides an electrical device. The electrical device includes the columnar secondary battery disclosed in one or more of the above embodiments.

### BRIEF DESCRIPTION OF DRAWINGS

FIG. 1 is a schematic exploded view of a partial structure of a columnar secondary battery according to an embodiment of this application;
FIG. 2 is a schematic diagram of an overall structure of a columnar secondary battery according to an embodiment of this application;
FIG. 3 is a cross-sectional schematic view of a columnar secondary battery sectioned along an A-A line according to an embodiment of this application;
FIG. 4 is a close-up view of a part A shown in FIG. 3;
FIG. 5 is a schematic diagram of a layered structure of a first sealing element according to an embodiment of this application;
FIG. 6 is a cross-sectional schematic view of a partial structure of a columnar secondary battery according to another embodiment of this application;
FIG. 7 is a top view of a positional relationship between a current collecting disc and a housing according to an embodiment of this application;
FIG. 8 is a cross-sectional view of a positional relationship between a current collecting disc and a housing according to an embodiment of this application;
FIG. 9 is a schematic structural diagram of an electrical device according to an embodiment of this application; and
FIG. 10 is a schematic flowchart of an electrolyte injection method of a columnar secondary battery according to an embodiment of this application.

List of reference numerals:
001 columnar secondary battery
100 housing
110 bottom wall
111 first through-hole
112 groove
120 accommodation cavity
130 sidewall
200 first sealing element
210 second through-hole
220 first layer
230 second layer
300 second sealing element
310 first part
320 second part
400 electrode assembly
410 first electrode
420 second electrode
500 end cap
600 current collecting disc
610 first connecting region
620 third through-hole
630 second connecting region
002 electrical device
Z axial direction of the columnar secondary battery

### DETAILED DESCRIPTION

The following describes the technical solutions in the embodiments of this application with reference to the drawings hereto. Evidently, the described embodiments are merely a part of but not all of the embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component. In this application, unless otherwise expressly specified and qualified, the terms such as "mount", "concatenate", "connect", and "fix" are generic in a broad sense, for example, mean a fixed connection, a detachable connection, or a one-piece configuration; or mean a mechanical connection, insulative connection, or electrical connection; or mean a direct connection or indirect connection implemented through an intermediary; or mean internal communication between two components. A person of ordinary skill in the art is able to understand the specific meanings of the terms in this application according to specific situations. The term "and/or" used herein includes any and all combinations of one or more relevant items enumerated.

Unless otherwise defined, all technical and scientific terms used herein bear the same meanings as what is normally understood by a person skilled in the technical field of this application. The terms used in the specification of this application are merely intended to describe specific embodiments but not to limit this application. The terms "include" and "contain" and any variations thereof used in the specification, claims, and brief description of drawings of this application are intended to cover a nonexclusive inclusion.

In the description of embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. To the extent that no conflict occurs, different embodiments of this application may be combined with each other. In the method steps, S1, S2, and the like represent merely the names of the steps, but do not limit the order of the steps.

It is hereby noted that, dimensions such as thickness, length, and width of various components in some embodiments of this application shown in the drawings, and dimensions such as overall thickness, length, and width of an integrated device are merely illustrative descriptions, but do not constitute any limitation on this application.

An embodiment of this application provides a columnar secondary battery. The columnar secondary battery includes a housing, a first sealing element, and a second sealing element. The housing includes a bottom wall. The bottom wall is provided with a first through-hole. The first sealing element is disposed on an outer surface of the bottom wall and covers at least a part of the first through-hole. At least a part of the second sealing element is disposed on one side of the first sealing element and covers the first sealing element and the first through-hole, the side is away from the bottom wall.

In the columnar secondary battery, the first sealing element covers at least a part of the first through-hole of the bottom wall. To be specific, the first sealing element fully covers the first through-hole, or the first sealing element partially covers the first through-hole. In the chemical formation stage of the columnar secondary battery, the first sealing element fully or partially covers the first through-hole, thereby alleviating the problem that the electrolyte solution is leaked during the chemical formation of the columnar secondary battery and corrodes the housing or allows moisture or other impurities to enter the housing. At least a part of the second sealing element is disposed on one side of the first sealing element and covers the first sealing element and the first through-hole, the side is away from the bottom wall, thereby favorably protecting the first sealing element and entirely sealing the housing, and improving the hermeticity and strength of the housing of the battery.

The following describes some embodiments of this application in detail with reference to drawings. To the extent that no conflict occurs, the following embodiments and the features in the embodiments may be combined with each other.

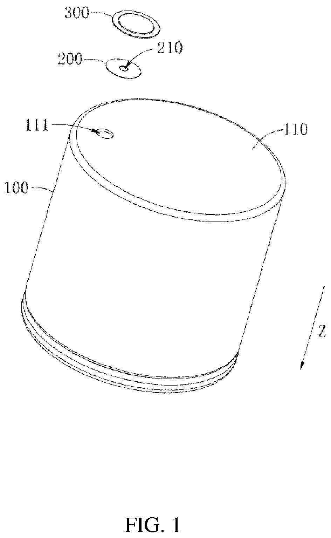

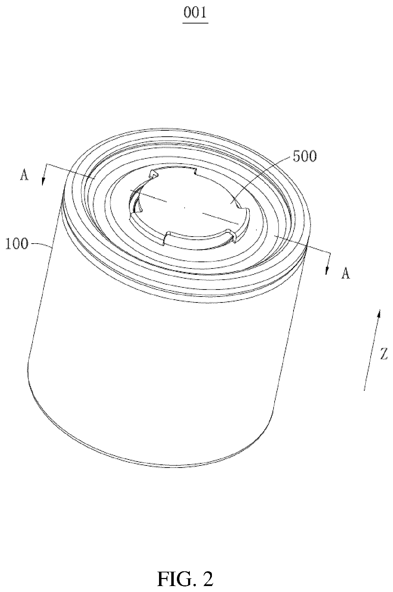

Referring to FIG. 1 and FIG. 2, an embodiment of this application provides a columnar secondary battery 001. The columnar secondary battery 001 includes a prismatic secondary battery, a cylindrical secondary battery, or a rounded prismatic secondary battery. Viewed along the axial direction Z of the columnar secondary battery 001, the axial end face of the prismatic secondary battery is a rectangle, the axial end face of the cylindrical secondary battery is a circle, and the axial end face of the rounded prismatic secondary battery is a rectangle with four rounded angles. The rectangle with four rounded angles include four arcuate angles and four straight sides. Each of the arcuate angles connects two adjacent straight sides.

In some embodiments, the columnar secondary battery 001 is a cylindrical secondary battery. The diameter of the cylindrical secondary battery ranges from 17 mm to 55 mm.

In some embodiments, the diameter of the cylindrical secondary battery is 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm, 50 mm, 51 mm, 52 mm, 53 mm, 54 mm, 55 mm, or any value falling between any two thereof.

In some embodiments, the columnar secondary battery 001 includes a housing 100. The housing 100.includes a bottom wall 110. The bottom wall 110 is provided with a first through-hole 111. The columnar secondary battery 001 further includes a first sealing element 200. The first sealing element 200 is disposed on the outer surface of the bottom wall 110 and covers at least a part of the first through-hole 111.

In the columnar secondary battery, the first sealing element 200 covers at least a part of the through-hole. To be specific, the first sealing element 200 fully covers the first through-hole 111, or the first sealing element 200 partially covers the first through-hole 111.

In some embodiments, the first sealing element 200 fully covers the first through-hole 111 in the chemical formation stage of the columnar secondary battery 001, so as to implement pre-sealing for the columnar secondary battery 001 and alleviate the problem that the electrolyte solution is leaked during the chemical formation of the columnar secondary battery 001 and corrodes the housing 100 or allows moisture to enter the housing 100. After completion of the chemical formation, the first sealing element 200 may be torn off from the bottom wall 110 to expose the first through-hole 111, thereby facilitating the pressure relief and electrolyte replenishment for the columnar secondary battery 001. After completion of the pressure relief and electrolyte replenishment, the first sealing element 200 is affixed to and covers the first through-hole 111.

In some embodiments, the first sealing element 200 partially covers the first through-hole 111 in the chemical formation stage of the columnar secondary battery 001, so as to reduce the opening area of the first through-hole 111 and reduce the risk that the electrolyte solution is leaked during the chemical formation of the columnar secondary battery 001 and corrodes the housing 100 or allows moisture to enter the housing 100. In addition, the first sealing element 200 partially covers the first through-hole 111, thereby making it convenient to directly replenish the columnar secondary battery 001 with the electrolyte solution upon completion of pressure relief, and facilitating the internal pressure relief for the columnar secondary battery 001 and improving the convenience of electrolyte replenishment.

In some embodiments, the first sealing element 200 partially covers the first through-hole 111. Viewed along the axial direction Z of the columnar secondary battery 001, the first through-hole 111 is located within the outer contour of the first sealing element 200, and the first sealing element 200 is provided with a second through-hole 210. The second through-hole 210 is located within the first through-hole 111 and connected to the first through-hole 111. In this way, it is convenient to directly replenish the columnar secondary battery 001 with the electrolyte solution upon completion of pressure relief.

In some embodiments, the first sealing element 200 partially covers the first through-hole 111. Viewed along the axial direction Z of the columnar secondary battery 001, a part of the first through-hole 111 is located outside the outer contour of the first sealing element 200, thereby making it convenient to directly replenish the columnar secondary battery 001 with the electrolyte solution upon completion of pressure relief.

In some embodiments, the columnar secondary battery 001 further includes a second sealing element 300. At least a part of the second sealing element 300 is disposed on one side of the first sealing element 200 and covers the first sealing element 200 and the first through-hole 111, the side is away from the bottom wall 110, thereby entirely sealing the housing 100, and improving the hermeticity of the housing 100 of the battery.

Referring to FIG. 1, FIG. 3, and FIG. 4, in some embodiments, the columnar secondary battery 001 further includes an electrode assembly 400. The housing 100 includes an accommodation cavity 120. The electrode assembly 400 is disposed in the accommodation cavity 120.

One end of the housing 100 is provided with an opening. The columnar secondary battery 001 further includes an end cap 500. The end cap 500 is disposed at the opening of the housing 100. The electrode assembly 400 includes a first electrode 410 and a second electrode 420. The second electrode 420 of the electrode assembly 400 is electrically connected to the housing 100. The first electrode 410 of the electrode assembly 400 is electrically connected to the end cap 500. The housing 100 is dielectrically connected to the end cap 500.

In some embodiments, the electrode assembly 400 assumes a full-tab jelly-roll structure (not shown in the drawing). The full-tab jelly-roll structure includes a first electrode plate, a second electrode plate, and a separator.

The first electrode plate, the separator, and the second electrode plate are stacked in sequence, and then the stacked structure is wound. The first electrode plate includes a first current collector and a first active coating. The first current collector includes a first coating region and a first blank foil region. The first active coating is disposed in the first coating region. In the jelly-roll structure, the part, away from the first coating region, of the first blank foil region, is flattened to form a first flattened region. The first flattened region serves as the first electrode 410.

In some embodiments, the second electrode plate includes a second current collector and a second active coating. The second current collector includes a second coating region and a second blank foil region. The second active coating is disposed in the second coating region. A part, away from the second coating region, of the second blank foil region is flattened to form a second flattened region. The second flattened region serves as the second electrode 420.

In some embodiments, the first electrode 410 is a positive electrode, and the second electrode 420 is a negative electrode.

In some embodiments, the first electrode 410 is a negative electrode, and the second electrode 420 is a positive electrode.

In some embodiments, the housing 100 includes a bottom wall 110 and a sidewall 130. The sidewall 130 surrounds and is hermetically connected to the outer side of the bottom wall 110 to form an accommodation cavity 120. The end cap 500 is dielectrically and hermetically connected to one side of the sidewall 130, the side is away from the bottom wall 110.

In some embodiments, the bottom wall 110 and the sidewall 130 are formed in one piece by stamping, so that the bottom wall 110 and the sidewall 130 are the same in thickness.

In another embodiment, the bottom wall 110 and the sidewall 130 are disposed separately and welded together. The bottom wall 110 and the sidewall 130 may be the same in thickness, or, the thickness of the bottom wall 110 may be greater than the thickness of the sidewall 130 depending on the structural design requirements of the columnar secondary battery 001.

In some embodiments, viewed along the axial direction Z of the columnar secondary battery 001, the first through-hole 111 is located inside the outer contour of the first sealing element 200 to fully cover the first through-hole 111. The first sealing element 200 is provided with a second through-hole 210. Viewed along the axial direction Z of the columnar secondary battery 001, the second through-hole 210 of the first sealing element 200 is located within the first through-hole 111 and connected to the first through-hole 111. In this way, the columnar secondary battery 001 can expel the gas in the housing 100 through the second through-hole 210 after completion of chemical formation, and can replenish the housing 100 with the electrolyte solution after completion of chemical formation, thereby facilitating the internal pressure relief for the columnar secondary battery 001 and improving the convenience of electrolyte replenishment.

In some embodiments, the area of the first through-hole 111 is S1, and the area of the second through-hole 210 is S2, 20% ≤ S2/S1 ≤ 60%. The ratio of the area S2 of the second through-hole 210 to the area S1 of the first through-hole 111 is greater than or equal to 20%. In this way, the area of the second through-hole 210 is not excessively small, thereby facilitating the gas exhausting during the chemical formation of the columnar secondary battery 001 and improving the convenience of electrolyte replenishment. The ratio of the area S2 of the second through-hole 210 to the area S1 of the first through-hole 111 is less than or equal to 60%, so that the area S2 of the second through-hole 210 is not excessively large, thereby alleviating the problem of electrolyte leakage during electrolyte replenishment.

In some embodiments, viewed along the axial direction Z of the columnar secondary battery 001, the first through-hole 111 is located inside the outer contour of the first sealing element 200 to fully cover the first through-hole 111. The first through-hole 111 is circular. Along the diameter direction of the first through-hole 111, the minimum distance between the edge of the first through-hole 111 and the edge of the outer contour of the first sealing element 200 is L, 1.5 mm ≤ L ≤ 3 mm, thereby increasing the connection strength between the first sealing element 200 and the bottom wall 110 and making it convenient to reserve a sufficient welding area for the bottom wall 110.

In some embodiments, the value of L is 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, or any value falling between any two thereof.

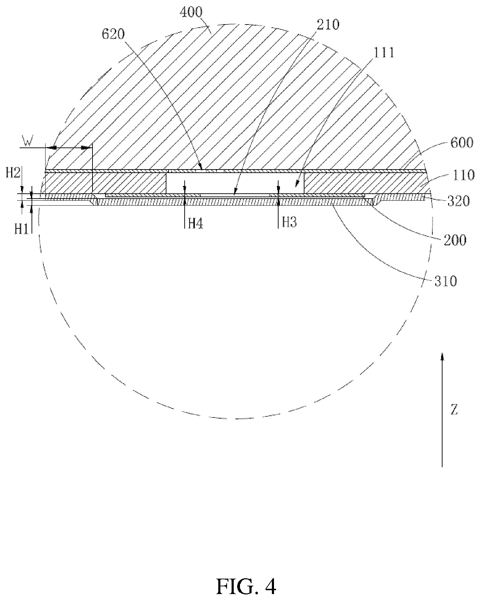

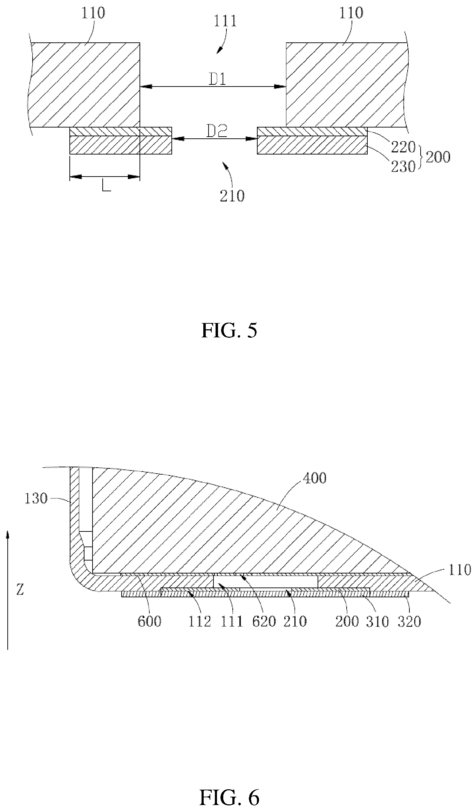

Referring to FIG. 4 and FIG. 5, in some embodiments, the diameter of the first through-hole 111 is D1, 1.5 mm ≤ D1 ≤ 4 mm. In this way, the first through-hole 111 is not excessively small, thereby improving the injection efficiency and also facilitating gas exhausting. On the other hand, the first through-hole 111 is not excessively large, thereby increasing the overall strength of the battery.

In some embodiments, the value of the diameter D1 of the first through-hole 111 is 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.9 mm, 4 mm, or any value falling between any two thereof.

In some embodiments, the second through-hole 210 is circular, and the diameter of the second through-hole 210 is D2, 1.8 mm ≤ D2 ≤ 3.1 mm. In this way, the second through-hole 210 is not excessively small, thereby improving the injection efficiency and also facilitating gas exhausting. The second through-hole 210 is not excessively large, thereby reducing the risk that the electrolyte solution is leaked or the risk that the moisture or other impurities enter the housing.

In some embodiments, the diameter D2 of the second through-hole 210 is 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, or any value falling between any two thereof.

In some embodiments, D2 < D1.

Referring to FIG. 4, in some embodiments, a part of the second sealing element 300 is disposed on one side of the first sealing element 200, the side is away from the bottom wall 110. The second sealing element 300 includes a first part 310 and a second part 320. Viewed along the axial direction Z of the columnar secondary battery 001, the second part 320 is disposed on the outer periphery of the first part 310. The first part 310 covers the first sealing element 200. By connecting the second part 320 of the second sealing element 300 to the bottom wall 110, this application improves the stability of connection between the second sealing element 300 and the bottom wall 110, and improves the hermeticity and overall strength of the housing 100 of the battery.

In some embodiments, the first part 310 and the second part 320 are formed in one piece.

In some embodiments, along the diameter direction of the columnar secondary battery 001, the minimum overlap dimension between the second part 320 and the bottom wall 110 in the axial direction Z of the columnar secondary battery 001 is W, 2 mm ≤ W ≤ 4 mm. The minimum overlap dimension between the second part 320 of the second sealing element 200 and the bottom wall 110 in the axial direction Z of the columnar secondary battery 001 is set to be greater than 2 mm and less than or equal to 4 mm, thereby further improving the stability of connection between the second part 320 of the second sealing element 300 and the bottom wall 110, improving the hermeticity and overall strength of the housing 100 of the battery, and making it convenient to reserve a sufficient welding area for the bottom wall 110.

In some embodiments, the value of W is 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.9 mm, 4 mm, or any value falling between any two thereof.

In some embodiments, the thickness of the first part 310 is H1, 0.2 mm ≤ H1 ≤ 0.3 mm.

In some embodiments, the value of the thickness H1 of the first part 310 is 0.2 mm, 0.21 mm, 0.22 mm, 0.23 mm, 0.24 mm, 0.25 mm, 0.26 mm, 0.27 mm, 0.28 mm, 0.29 mm, 0.3 mm, or any value falling between any two thereof.

In some embodiments, the thickness of the second part 320 is H2, 0.2 mm ≤ H2 ≤ 0.3 mm.

In some embodiments, the value of the thickness H2 of the second part 320 is 0.2 mm, 0.21 mm, 0.22 mm, 0.23 mm, 0.24 mm, 0.25 mm, 0.26 mm, 0.27 mm, 0.28 mm, 0.29 mm, 0.3 mm, or any value falling between any two thereof.

In some embodiments, along the axial direction X of the columnar secondary battery 001, the distance between the first part 310 and the bottom wall 110 is H3, and the thickness of the first sealing element 200 is H4, 1.1 ≤ H3/H4 ≤ 1.3. On the one hand, because the columnar secondary battery 001 generates gas during chemical formation, the first sealing element 200 is prone to bulge outward under the action of the gas pressure. A clearance exists between the first part 310 and the first sealing element 200, thereby providing space for the first sealing element 200 to bulge outward, and reducing the impact on the connecting region between the first sealing element 200 and the bottom wall 110 when the first sealing element 200 bulges outward. On the other hand, by designing H3 to be greater than H4, this application alleviates the problem of interference between the first part 310 and the first sealing element 200, and improves the stability of connection between the second part 320 of the second sealing element 300 and the bottom wall 110.

In some embodiments, along the axial direction Z of the columnar secondary battery 001, the thickness of the first sealing element 200 is H4, 0.1 mm ≤ H4 ≤ 0.2 mm, thereby increasing the strength of the first sealing element 200, reducing the space occupied by the first sealing element 200 in the axial direction Z of the columnar secondary battery 001, and reducing the adverse effect of the first sealing element 200 on the energy density of the columnar secondary battery 001.

In some embodiments, the value of the thickness H4 of the first sealing element 200 is 0.1 mm, 0.11 mm, 0.12 mm, 0.13 mm, 0.14 mm, 0.15 mm, 0.16 mm, 0.17 mm, 0.18 mm, 0.19 mm, 0.2 mm, or any value falling between any two thereof.

Referring to FIG. 6, in some embodiments, the second sealing element 300 is entirely disposed on one side of the first sealing element 200, the side is away from the bottom wall 110. The outer surface of the bottom wall 110 is provided with a groove 112. The first sealing element 200 is accommodated in the groove 112, thereby reducing the space occupied by the first sealing element 200 in the axial direction Z of the columnar secondary battery 001. In addition, along the axial direction Z of the columnar secondary battery 001, the depth of the groove 112 is greater than the thickness of the first sealing element 200. In this way, the surface, away from the bottom, of the second sealing element 300 is flat and even, thereby reducing the space occupied by the second sealing element 300 in the axial direction Z of the columnar secondary battery 001, and reducing the adverse effect of the second sealing element 300 on the energy density of the columnar secondary battery 001. The second sealing element 300 is directly connected to the bottom wall 110 and covers the groove 112. The surface of the second sealing element 300 is flat and even, thereby improving the stability of connection between the second part 320 of the second sealing element 300 and the bottom wall 110.

Referring to FIG. 4 and FIG. 5, in some embodiments, the first sealing element 200 includes a first layer 220 and a second layer 230. The second layer 230 is located on one side of the first layer 220, the side is away from the bottom wall 110. Both the first layer 220 and the second layer 230 are polymer layers. The first sealing element 200 contacts the electrolyte solution, and both the first layer 220 and the second layer 230 are polymer layers, thereby improving the corrosion resistance of the first sealing element 200 to the electrolyte solution. The melting point of the second layer 230 is higher than that of the first layer 220, thereby melting the first layer 220 by heating and pressurizing in a process of pre-hermetically affixing the first sealing element 200 to the bottom wall 110, and in turn, improving the sealing performance and producing an effect of quick connection to the bottom wall 110. The second layer 230 melts at a relatively high melting point, and does not melt during the heating and pressurizing, thereby improving the integrity of the first sealing element 200 and reducing the possibility of overall shrinkage or crumbling of the first sealing element 200 during the heating and pressurization.

In some embodiments, the melting point of the first layer 220 is set between 100 °C and 200 °C, and the melting point of the second layer 230 is set between 200 °C and 300 °C. When the first sealing element 200 is pre-hermetically affixed to the bottom wall 110, the first sealing element 200 is heated to a temperature between 100 °C and 200 °C, thereby making it convenient for the first layer 220 to melt and get connected to the bottom wall 110, and reducing the processing difficulty. In addition, the melting point of the first layer 220 is designed to be higher than the normal working temperature of the battery, thereby reducing the risk that the first layer 220 is damaged and causes leakage.

In some embodiments, the material of the first layer 220 includes polypropylene.

In some embodiments, the material of the first layer 220 includes polyethylene.

In some embodiments, the material of the second layer 230 includes polyethylene naphthalate.

In some embodiments, the material of the second layer 230 includes polyethylene terephthalate.

In some embodiments, the material of the second sealing element 300 includes nickel.

In some embodiments, the material of the second sealing element 300 includes nickel-plated carbon steel.

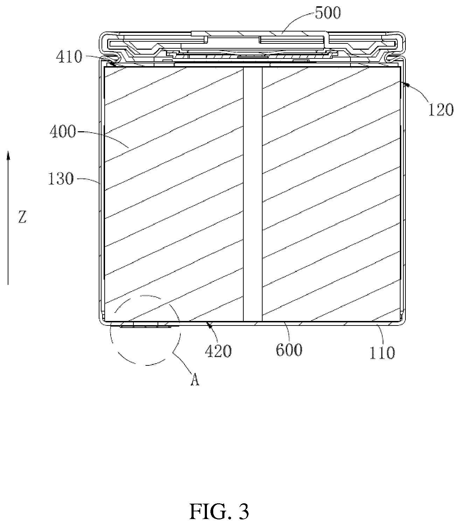

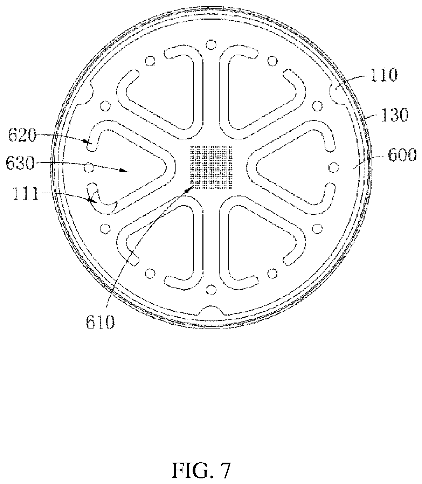

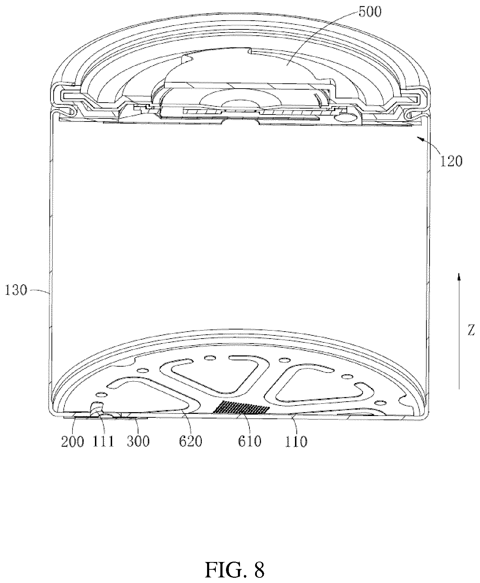

Referring to FIG. 3, FIG. 7, and FIG. 8, in some embodiments, the columnar secondary battery 001 further includes an electrode assembly 400 and a current collecting disc 600. Both the electrode assembly 400 and the current collecting disc 600 are disposed in the accommodation cavity 120. The current collecting disc 600 is disposed between the electrode assembly 400 and the bottom wall 110, and connects the electrode assembly 400 and the bottom wall 110. A first connecting region 610 is disposed in a central region of the current collecting disc 600. The first connecting region 610 is welded to the bottom wall 110.

The current collecting disc 600 is provided with a third through-hole 620. The third through-hole 620 is in communication with the first through-hole 111.

In some embodiments, the third through-hole 620 is configured as a slot to form a through-slot. The through-slot is bent peripherally to form a second connecting region 630. The second connecting region 630 is welded to the electrode assembly 400.

In some embodiments, a plurality of third through-holes 620 are provided, and the plurality of third through-holes 620 are symmetrically distributed around the center of the first connecting region 610.

In some embodiments, 6 third through-holes 620 are provided.

In the columnar secondary battery 001, the current collecting disc 600 is configured to connect the electrode assembly 400 and the bottom wall 110, thereby improving the stability of electrical connection between the electrode assembly 400 and the housing 100. The third through-hole 620 on the current collecting disc 600 is in communication with the first through-hole 111, thereby making it convenient for the electrolyte solution to pass through the third through-hole 620 of the current collecting disc 600 and infiltrate the electrode assembly 400 during injection, and improving the injection efficiency.

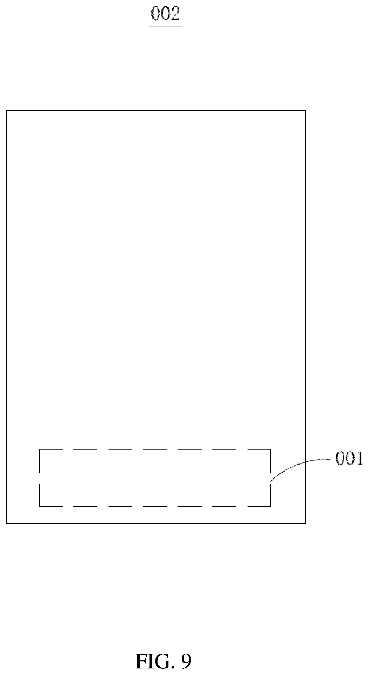

Referring to FIG. 9, an embodiment of this application further provides an electric device 002, including the columnar secondary battery 001 disclosed in one or more of the above embodiments.

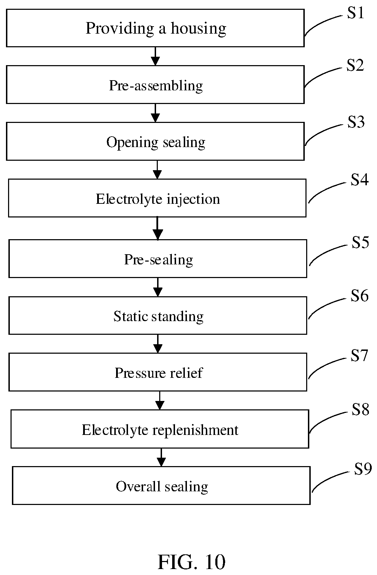

Referring to FIG. 10, an embodiment of this application further provides an electrolyte injection method for a columnar secondary battery 001. The method is used for injecting an electrolyte solution into the columnar secondary battery 001 disclosed in one or more of the above embodiments. The method includes the following steps:
S1. Providing a housing 100, where the housing 100 includes an accommodation cavity 120 and is provided with an opening at one end, the housing 100 includes a bottom wall 110, and the bottom wall 110 includes a first through-hole 111.
S2. Pre-assembling: placing an electrode assembly 400 into the accommodation cavity 120, where the electrode assembly 400 includes a first electrode 410 and a second electrode 420; and electrically connecting the second electrode 420 to the housing 100.
S3. Opening sealing: electrically connecting the first electrode 410 to an end cap 500, and then sealing the opening with the end cap 500, where the end cap 500 is dielectrically connected to the housing 100.
S4. Electrolyte injection: injecting the electrolyte solution into the housing 100 from the first through-hole 111.
S5. Pre-sealing: hermetically closing the first through-hole 111 by using the first sealing element 200.
S6. Static standing: leaving the pre-sealed battery to stand statically to allow reactions between the electrode assembly 400 and the electrolyte solution.
S7. Pressure relief: unsealing the first through-hole 111 sealed by the first sealing element 200 so that the accommodation cavity 120 communicates with the outside environment.
S8. Electrolyte replenishment: replenishing the accommodation cavity 120 with the electrolyte solution through the second through-hole 210.
S9. Overall sealing: using a second sealing element 300 to cover the first sealing element 200 and the first through-hole 111, and welding and sealing the bottom wall 110 with the second sealing element 300.

In some embodiments, the first through-hole 111 sealed with the first sealing element 200 is unsealed in the pressure relief step by puncturing the first sealing element 200 to form a second through-hole 210 on the first sealing element 200. The second through-hole 210 is in communication with the first through-hole 111, so that the accommodation cavity 120 communicates with the outside environment.

In some embodiments, the first through-hole 111 sealed with the first sealing element 200 is unsealed in the pressure relief step by tearing off the first sealing element 200 so that the accommodation cavity 120 communicates with the outside environment. After completion of the pressure relief step and the electrolyte replenishment step, the first through-hole 111 is sealed again by using the first sealing element 200.

In order to verify the adverse effect of the gas pressure on the connection strength between the first sealing element 200 and the bottom wall 110 during the chemical formation of the columnar secondary battery 001, the following test is performed by using a steel-shell cylindrical secondary battery 001 as an example:

A steel-shell columnar secondary battery 001 with an injected electrolyte solution is chemically formed in a 45 °C environment, and then left to stand for 120 minutes. It is determined whether the first sealing element 200 is detached from the bottom wall 110 by observing the joint thereof.

The above test is performed in two groups. The first group of test includes Embodiments 1 to 4 and Comparative Embodiment 1. The second group of test includes Embodiments 5 to 8 and Comparative Embodiment 2.

In the first group of test, 10 steel-shell columnar secondary batteries 001 are tested in each embodiment or comparative embodiment. The diameter of each steel-shell columnar secondary battery 001 is 50 mm, and the length of each battery is 48 mm. If the first sealing element 200 of a battery is partially or fully detached from the bottom wall 110 after the chemical formation, the battery fails the test. If the first sealing element 200 is not detached from the bottom wall 110 after the chemical formation, the battery passes the test. Pass rate = (number of batteries that pass the test/10) × 100%.

In the second group of test, 10 steel-shell columnar secondary batteries 001 are tested in each embodiment or comparative embodiment. The diameter of each steel-shell columnar secondary battery 001 is 21 mm, and the length of each battery is 70 mm. If the first sealing element 200 of a battery is partially or fully detached from the bottom wall 110 after the chemical formation, the battery fails the test. If the first sealing element 200 is not detached from the bottom wall 110 after the chemical formation, the battery passes the test. Pass rate = (number of batteries that pass the test/10) × 100%.

The following describes the specific implementations of the columnar secondary batteries 001 in the embodiments and comparative embodiments.

### Embodiment 1

A cylindrical secondary battery 001 is prepared in the following process:

### (1) Preparing a positive electrode plate

Ni92 (LiNi_{0.92}Co_{0.03}Mn_{0.05}O₂) as a positive active material, polyvinylidene difluoride (PVDF) as a binder, conductive carbon black as a conductive agent, and carbon nanotubes are mixed at a mass ratio of 96 : 2 : 1 : 1. N-methyl-pyrrolidone (NMP) is added as a solvent. The mixture is stirred with a vacuum mixer to obtain a homogeneous positive electrode slurry in which the solid content is 75 wt%. The positive electrode slurry is evenly applied onto one surface of 13 µm-thick positive current collector aluminum foil, and dried at 90 °C to obtain a positive electrode plate coated with a (100 µm-thick) positive active material layer on a single side (the coating weight of the positive active material layer per unit area on a single side of the positive electrode plate is 380 mg/1540.25 mm²). Subsequently, the above steps are repeated on the other surface of the aluminum foil to obtain a positive electrode plate coated with the positive active material layer on both sides. Subsequently, the positive electrode plate is cold-pressed and cut to obtain a finished positive electrode plate ready for use.

### (2) Preparing a negative electrode plate

Artificial graphite as a negative active material, styrene-butadiene rubber, and Super-P as a conductive agent are mixed at a mass ratio of 96 : 2 : 2, and then deionized water is added as a solvent. The mixture is stirred with a vacuum mixer to formulate a homogeneous negative electrode slurry in which the solid content is 50 wt%. The negative electrode slurry is evenly applied onto one surface of 10 µm-thick negative current collector copper foil, and dried at 85 °C to obtain a negative electrode plate coated with a 60 µm-thick negative active material layer on a single side (the coating weight of the negative active material layer per unit area on a single side of the negative electrode plate is 170 mg/1540.25 mm²). Subsequently, the above steps are repeated on the other surface of the copper foil to obtain a negative electrode plate coated with the negative active material layer on both sides. Subsequently, the negative electrode plate is cold-pressed and cut to obtain a finished negative electrode plate ready for use.

### (3) Preparing a separator

An aluminum oxide coating is disposed on one surface of a base film to make a separator. The base film is a 9 µm-thick polyethylene base film (supplied by Celgard), and the thickness of the aluminum oxide coating is 2 µm.

### (4) Preparing an electrolyte solution

Ethylene carbonate (EC) and ethyl methyl carbonate (EMC) are mixed at a mass ratio of 1 : 1 in an environment in which the moisture content is less than 10 ppm, so as to form a nonaqueous organic solvent as a base solvent. Vinylene carbonate and 1,3-propane sultone are added as additives into the base solvent, and then a LiPF₆ lithium salt and fluoroethylene carbonate (FEC) are added, dissolved, and stirred well to form an electrolyte solution. Based on the mass of the electrolyte solution, the mass percent of the vinylene carbonate is 1%, the mass percent of the 1,3-propane sultone is 3%, the mass percent of the LiPF₆ is 12.5%, the mass percent of the fluoroethylene carbonate is 1%, and the remainder is nonaqueous organic solvent.

### (5) Preparing an electrode assembly

The above-prepared negative electrode plate, separator and positive electrode plate are stacked in sequence, and then the stacked structure is wound to obtain an electrode assembly. The blank foil region of the positive electrode plate and the blank foil region of the negative electrode plate are located opposite to each other at two ends of the electrode assembly respectively.

The end portions of the blank foil region of the positive electrode plate and the end portions of the negative electrode plate of the electrode assembly are flattened to form flattened regions serving as tabs.

### (6) Preparing a battery

The electrode assembly is placed in a steel shell with a bottom wall provided with a through-hole. The positive current collecting disc is welded to the end cap and the flattened region of the positive electrode plate separately. The negative current collecting disc is welded to the bottom wall and the flattened region of the negative electrode plate separately. The electrode assembly is dried, and then an electrolyte solution is injected. The electrode assembly is subjected to the processes such as electrolyte injection, chemical formation, pressure relief, electrolyte replenishment, and sealing to obtain a lithium-ion battery cell.

The first layer of the first sealing element is polypropylene, and the second layer is polyethylene naphthalate. The material of the second sealing element is nickel-plated carbon steel.

### Embodiments 2 to 4

The differences between Embodiments 2 to 4 and Embodiment 1 are shown in Table 1. The rest is the same as in Embodiment 1.

Comparative Embodiment 1: The difference from Embodiment 1 is that the minimum distance L between the edge of the first through-hole 111 and the edge of the first sealing element 200 is equal to 1 mm. The rest is the same as in Embodiment 1.

### Embodiment 5

The difference from Embodiment 1 is that the preparation process of the positive electrode plate is as follows:
Ni91 (LiNi_{0.91}Co_{0.04}Mn_{0.05}O₂) as a positive active material, polyvinylidene difluoride (PVDF) as a binder, conductive carbon black as a conductive agent, and carbon nanotubes are mixed at a mass ratio of 96 : 2 : 1 : 1. N-methyl-pyrrolidone (NMP) is added as a solvent. The mixture is stirred with a vacuum mixer to obtain a homogeneous positive electrode slurry in which the solid content is 75 wt%. The positive electrode slurry is evenly applied onto one surface of 13 µm-thick positive current collector aluminum foil, and dried at 90 °C to obtain a positive electrode plate coated with a (100 µm-thick) positive active material layer on a single side (the coating weight of the positive active material layer per unit area on a single side of the positive electrode plate is 217 mg/1540.25 mm²). Subsequently, the above steps are repeated on the other surface of the aluminum foil to obtain a positive electrode plate coated with the positive active material layer on both sides. Subsequently, the positive electrode plate is cold-pressed and cut to obtain a finished positive electrode plate ready for use.

### Preparing a negative electrode plate:

Artificial graphite as a negative active material, Super-P as a conductive agent, and styrene-butadiene rubber are mixed at a mass ratio of 97.4 : 1.4 : 1.2, and then deionized water is added as a solvent. The mixture is stirred with a vacuum mixer to formulate a homogeneous negative electrode slurry in which the solid content is 51 wt%. The negative electrode slurry is evenly applied onto one surface of 8 µm-thick negative current collector copper foil, and dried at 85 °C to obtain a negative electrode plate coated with a 60 µm-thick negative active material layer on a single side (the coating weight of the negative active material layer per unit area on a single side of the negative electrode plate is 113 mg/1540.25 mm²). Subsequently, the above steps are repeated on the other surface of the copper foil to obtain a negative electrode plate coated with the negative active material layer on both sides. Subsequently, the negative electrode plate is cold-pressed and cut to obtain a finished negative electrode plate ready for use.

The differences between Embodiments 6 to 8 and Embodiment 5 are shown in Table 1. The rest is the same as in Embodiment 5.

Comparative Embodiment 2: The difference from Embodiment 5 is that the minimum distance L between the edge of the first through-hole 111 and the edge of the first sealing element 200 is equal to 1 mm. The rest is the same as in Embodiment 5.

The main parameters and test results of each embodiment and comparative embodiment are shown in Table 1:

**Table 1 (To be continued)**

| Serial number | Dimension | D1 | S1 | D2 | S2 |
|---|---|---|---|---|---|
| Embodiment 1 | 50×48 | 4 | 4*π* | No through-hole | / |
| Embodiment 2 | 50×48 | 1.5 | 0.56*π* | No through-hole | / |
| Embodiment 3 | 50×48 | 4 | 4*π* | 1.8 | 0.81*π* |
| Embodiment 4 | 50×48 | 4 | 4*π* | 3.1 | 2.4*π* |
| Comparative Embodiment 1 | 50×48 | 4 | 4*π* | No through-hole | / |
| Embodiment 5 | 21×70 | 4 | 4*π* | No through-hole | / |
| Embodiment 6 | 21×70 | 1.5 | 0.56*π* | No through-hole | / |
| Embodiment 7 | 21×70 | 4 | 4*π* | 1.8 | 0.81*π* |
| Embodiment 8 | 21×70 | 4 | 4*π* | 3.1 | 2.4*π* |
| Comparative Embodiment 2 | 21×70 | 4 | 4*π* | No through-hole | / |

**Table 1 (Continued)**

| Serial number | S2/S1 | L | W | H4 | H1 | H2 | H3 | H3/H4 | Pass rate |
|---|---|---|---|---|---|---|---|---|---|
| Embodiment 1 | / | 1.5 | 2 | 0.1 | 0.2 | 0.2 | 0.12 | 1.2 | 100% |
| Embodiment 2 | / | 1.5 | 2 | 0.1 | 0.2 | 0.2 | 0.12 | 1.2 | 100% |
| Embodiment 3 | 20% | 1.5 | 2 | 0.1 | 0.2 | 0.2 | 0.12 | 1.2 | 100% |
| Embodiment 4 | 60% | 1.5 | 2 | 0.1 | 0.2 | 0.2 | 0.12 | 1.2 | 100% |
| Comparative Embodiment 1 | / | 1 | 2 | 0.1 | 0.2 | 0.2 | 0.12 | 1.2 | 60% |
| Embodiment 5 | / | 1.5 | 2 | 0.1 | 0.2 | 0.2 | 0.12 | 1.2 | 100% |
| Embodiment 6 | / | 1.5 | 2 | 0.1 | 0.2 | 0.2 | 0.12 | 1.2 | 100% |
| Embodiment 7 | 20% | 1.5 | 2 | 0.1 | 0.2 | 0.2 | 0.12 | 1.2 | 100% |
| Embodiment 8 | 60% | 1.5 | 2 | 0.1 | 0.2 | 0.2 | 0.12 | 1.2 | 100% |
| Comparative Embodiment 2 | / | 1 | 2 | 0.1 | 0.2 | 0.2 | 0.12 | 1.2 | 50% |

| | | | | | | | | | |
|---|---|---|---|---|---|---|---|---|---|
| Note: "/" means not applicable or not available. | | | | | | | | | |

In Table 1, the unit of length is millimeter (mm), the unit of area is square millimeter (mm²), and the ratio is unitless.

As can be seen from Embodiment 1 versus Embodiment 2 and Embodiment 5 versus Embodiment 6, when the size of the columnar secondary battery remains constant, the gas pressure inside the columnar secondary battery is related to the size of the internal air chamber and is not related to the size of the battery. The size of the air chamber is affected by the volume of the accommodation cavity of the housing, the volume of the electrode assembly, the volume of the electrolyte solution, and the volumes of various components in the accommodation cavity. When the first sealing element is provided with no through-hole, the first sealing element is most affected by the gas pressure. When the minimum distance L between the edge of the first through-hole and the edge of the first sealing element is equal to 1.5 mm, the connection strength between the first sealing element and the bottom wall meets the test requirements. The first sealing element is not detached from the bottom wall after completion of the chemical formation.

As can be seen from Embodiment 1 versus Comparative Embodiment 1 and Embodiment 5 versus Comparative Embodiment 2, when the minimum distance L between the edge of the first through-hole and the edge of the first sealing element is less than 1.5 mm, the connection strength between the first sealing element and the bottom wall is deficient, and the connection strength between the first sealing element and the bottom wall does not meet the test requirements. The first sealing element is detached from the bottom wall after completion of the chemical formation.

In addition, various modifications and variations may be made by a person of ordinary skill in the art based on the technical concept hereof, and all such modifications and variations still fall within the protection scope of the claims hereof.

## Claims

1. A columnar secondary battery(001), **characterized in that** the secondary battery(001) comprises:
a housing(100) comprising a bottom wall(110), wherein the bottom wall(110) is provided with a first through-hole(111);
a first sealing element(200) disposed on an outer surface of the bottom wall(110) and covering at least a part of the first through-hole(111); and
a second sealing element(300), wherein at least a part of the second sealing element(300) is disposed on one side of the first sealing element(200) and covers the first sealing element(200) and the first through-hole(111), the one side of the first sealing element(200) is a side facing away from the bottom wall(110).

2. The columnar secondary battery(001) according to claim 1, wherein
viewed along an axial direction(Z) of the columnar secondary battery(001), the first through-hole(111) is located within an outer contour of the first sealing element(200);
the first sealing element(200) is provided with a second through-hole(210); and, viewed along the axial direction(Z) of the columnar secondary battery(001), the second through-hole(210) is located within the first through-hole(111), and the second through-hole(210) is in communication with the first through-hole(111).

3. The columnar secondary battery(001) according to claim 2, wherein
an area of the first through-hole(111) is S1, and an area of the second through-hole(210) is S2, 20% ≤ S2/S1 ≤ 60%.

4. The columnar secondary battery(001) according to any one of claims 1 to 3, wherein
viewed along an axial direction(Z) of the columnar secondary battery(001), the first through-hole(111) is located within an outer contour of the first sealing element(200);
the first through-hole(111) is circular; and, along a diameter direction of the first through-hole(111), a minimum distance between an edge of the first through-hole(111) and an edge of the outer contour of the first sealing element(200) is L, 1.5 mm ≤ L ≤ 3 mm.

5. The columnar secondary battery(001) according to any one of claims 1 to 4, wherein a diameter of the first through-hole(111) is D1, 1.5 mm ≤ D1 ≤ 4 mm.

6. The columnar secondary battery(001) according to any one of claims 1 to 5, wherein
the second sealing element(300) comprises a first part(310) and a second part(320), and, viewed along an axial direction(Z) of the columnar secondary battery(001), the second part(320) is disposed on an outer periphery of the first part(310), the first part(310) covers the first sealing element(200), and the second part(320) is directly connected to the bottom wall(110).

7. The columnar secondary battery(001) according to claim 6, wherein
the first through-hole(111) is circular; and, along a diameter direction of the first through-hole(111), a minimum overlap dimension between the second part(320) and the bottom wall(110) in the axial direction(Z) is W, 2 mm ≤ W ≤ 4 mm.

8. The columnar secondary battery(001) according to claim 6 or 7, wherein
along the axial direction(Z) of the columnar secondary battery(001), a distance between the first part(310) and the bottom wall(110) is H3, and a thickness of the first sealing element(200) is H4, 1.1 ≤ H3/H4 ≤ 1.3;
and/or, 0.1 mm ≤ H4 ≤ 0.2 mm.

9. The columnar secondary battery(001) according to any one of claims 6 to 8, wherein
a thickness of the first part(310) is H1, 0.2 mm ≤ H1 ≤ 0.3 mm; and/or, a thickness of the second part(320) is H2, 0.2 mm ≤ H2 ≤ 0.3 mm.

10. The columnar secondary battery(001) according to any one of claims 1 to 9, wherein the first sealing element(200) comprises a first layer(220) and a second layer(230), the second layer(230) is located on a side of the first layer(220), the side of the first layer(220) is a side facing away from the bottom wall(110);
both the first layer(220) and the second layer(230) are polymer layers, and a melting point of the second layer(230) is higher than a melting point of the first layer(220);
and/or, the melting point of the first layer(220) is between 100 °C and 200 °C, and the melting point of the second layer(230) is between 200 °C and 300 °C.

11. The columnar secondary battery(001) according to claim 10, wherein
a material of the first layer(220) comprises polypropylene or polyethylene; and/or, a material of the second layer(230) comprises polyethylene naphthalate or polyethylene terephthalate.

12. The columnar secondary battery(001) according to any one of claims 1 to 11, wherein a material of the second sealing element(300) comprises nickel or nickel-plated carbon steel.

13. The columnar secondary battery(001) according to any one of claims 1 to 12, wherein
the secondary battery(001) further comprises an electrode assembly(400) and a current collecting disc(600), the housing(100) comprises an accommodation cavity(120), both the electrode assembly(400) and the current collecting disc(600) are disposed in the accommodation cavity(120), the current collecting disc(600) is disposed between the electrode assembly(400) and the bottom wall(110), and the current collecting disc(600) connects the electrode assembly(400) and the bottom wall(110); and
the current collecting disc(600) is provided with a third through-hole(620), and the third through-hole(620) is in communication with the first through-hole(111).

14. A method for injecting an electrolyte solution into the columnar secondary battery(001) according to any one of claims 1 to 13, **characterized in that** the method comprises the following steps:
providing the housing(100), wherein the housing(100) comprises an accommodation cavity(120) and is provided with an opening at one end, the housing(100) comprises a bottom wall(110), and the bottom wall(110) comprises a first through-hole(111);
pre-assembling: placing an electrode assembly(400) comprising a first electrode(410) and a second electrode(420) into the accommodation cavity(120), and electrically connecting the second electrode(420) to the housing(100);
opening sealing: electrically connecting the first electrode(410) to an end cap(500), and then sealing the opening with the end cap(500), wherein the end cap(500) is dielectrically connected to the housing(100);
electrolyte injection: injecting the electrolyte solution into the housing(100) from the first through-hole(111);
pre-sealing: hermetically closing the first through-hole(111) by using the first sealing element(200);
static standing: leaving the pre-sealed battery to stand statically to allow reactions between the electrode assembly(400) and the electrolyte solution;
pressure relief: unsealing the first through-hole(111) sealed by the first sealing element(200) so that the accommodation cavity(120) communicates with an outside environment;
electrolyte replenishment: replenishing the accommodation cavity(120) with the electrolyte solution through the first through-hole(111); and
overall sealing: using a second sealing element(300) to cover the first sealing element(200) and the first through-hole(111), and welding and sealing the bottom wall(110) with the second sealing element(300).

15. An electrical device(002), **characterized in that** the electrical device(002) comprises the columnar secondary battery(001) according to any one of claims 1 to 13.
